**Europäisches Patentamt**

**European Patent Office**

**Office européen des brevets**

(11) Numéro de publication: **0 296 953**
**A1**

# (12) DEMANDE DE BREVET EUROPEEN

(21) Numéro de dépôt: **88401534.8**

(22) Date de dépôt: **20.06.88**

(51) Int. Cl.⁴: **G 21 C 3/20**

(30) Priorité: **25.06.87 FR 8708988**

(43) Date de publication de la demande:
**28.12.88 Bulletin 88/52**

(84) Etats contractants désignés: **BE DE ES GB SE**

(71) Demandeur: **FRAMATOME**
**Tour Fiat 1 place de la Coupole**
**F-92400 Courbevoie (FR)**

**COGEMA COMPAGNIE GENERALE DES MATIERES NUCLEAIRES**
**2, rue Paul Dautier B.P. 4**
**F-78141 Velizy-Villacoublay (FR)**

(72) Inventeur: **Chotard, Alain**
**4 Impasse de la Meunerie**
**F-69250 - Neuville sur Saone (FR)**

(74) Mandataire: **Bouget, Lucien et ai**
**Cabinet Lavoix 2, Place d'Estienne d'Orves**
**F-75441 Paris Cédex 09 (FR)**

(54) **Elément combustible nucléaire réalisé sous forme modulaire capsule modulaire pour un tel élément et procédé de fabrication d'une capsule modulaire.**

(57) L'élément combustible comporte une pluralité de capsules modulaires (5) disposées l'une à la suite de l'autre dans la direction axiale, à l'intérieur d'une gaine (2). Chacune des capsules modulaires (5) comporte une enveloppe tubulaire (10) fermée à ses deux extrémités par un élément poreux (13, 14) et renfermant un empilement de pastilles (11) en contact avec la surface intérieure de l'enveloppe (10) sans jeu radial. Le diamètre extérieur des capsules (5) est tel qu'un jeu radial très faible subsiste entre la surface extérieure de la capsule (5) et la surface intérieure de la gaine (2).

FIG.1

EP 0 296 953 A1

## Description

**Elément combustible nucléaire réalisé sous forme modulaire, capsule modulaire pour un tel élément et procédé de fabrication d'une capsule modulaire**

L'invention concerne un élément combustible nucléaire réalisé sous forme modulaire ainsi qu'une capsule modulaire pour un tel élément et un procédé de fabrication d'une capsule modulaire.

On connaît des éléments combustibles nucléaires destinés à être groupés sous forme de faisceaux parallèles ou assemblages constituant, par leur juxtaposition, le coeur d'un réacteur nucléaire. De tels éléments combustibles comportent une gaine tubulaire fermée à ses extrémités, en un matériau résistant au fluage et à la corrosion sous l'action du réfrigérant à pression et température élevées du réacteur nucléaire et renfermant des pastilles empilées dans la direction axiale de la gaine, ces pastilles généralement réalisées sous forme frittée étant en un matériau combustible nucléaire tel que l'oxyde d'uranium ou l'oxyde mixte d'uranium et de plutonium.

La gaine de l'élément combustible nucléaire a notamment pour rôle d'empêcher l'échappement du produit gazeux de fission dans le fluide réfrigérant et la mise en contact du matériau combustible et du réfrigérant, ce qui entraînerait l'apparition de réactions chimiques. La gaine assure également une fonction mécanique : elle doit maintenir l'empilement de pastilles et résister à la différence de pression entre l'intérieur et l'extérieur de l'élément combustible.

La tenue à long terme des éléments combustibles nucléaires et notamment ceux utilisés dans un réacteur nucléaire refroidi et modéré à l'eau légère est tributaire d'un phénomène désigné sous le nom d'interaction pastilles-gaine. Cette interaction résulte de la combinaison d'une action mécanique, à savoir la mise en contrainte de la gaine lors du gonflement et de la dilatation des pastilles sous irradiation, et d'une action chimique, due notamment aux produits de fission libérés par les pastilles sous irradiation.

On a proposé diverses solutions pour limiter dans la mesure du possible l'interaction pastilles-gaine ou ses conséquences sur la tenue des éléments combustibles.

On a proposé, par exemple, dans la demande de brevet Français 2.551.905, de placer à l'intérieur de la gaine de l'élément combustible, un tube ouvert de maintien de l'empilement de pastilles sur une partie au moins de sa longueur. Ce tube permet de séparer la gaine de l'empilement et se trouve séparé de la gaine par un intervalle radial d'une amplitude suffisante pour retarder la venue en contact du tube et de la gaine, lors du gonflement sous irradiation des pastilles de combustible.

La réalisation d'un tel élément combustible présente des difficultés dans la mesure où cet élément est de grande longueur, par exemple d'une longueur de l'ordre quatre mètres, comme dans le cas des réacteurs nucléaires refroidis par de l'eau sous pression. Il est en effet difficile d'assurer une fabrication et un montage à l'intérieur de la gaine, d'un tube de grande longueur, de façon à ménager un jeu radial faible et constant sur toute la longueur du tube, entre ce tube et la surface intérieure de la gaine.

La réalisation d'un empilement de pastilles à l'intérieur du tube de grande longueur est également une opération longue, difficile à réaliser et qui nécessite de prévoir des pastilles dont le diamètre est un peu inférieur au diamètre intérieur du tube, la présence d'un certain jeu radial de montage étant indispensable. Ce jeu radial réduit l'efficacité des échanges thermiques entre les pastilles et la gaine, si bien qu'il est nécessaire d'augmenter la température des pastilles en fonctionnement, pour maintenir le flux thermique à la valeur requise.

D'autre part, il peut être nécessaire de disposer d'éléments combustibles nucléaires qui comportent des zones dont la composition est différente, suivant la position de ces zones dans la direction axiale de l'élément combustible.

Par exemple, il peut être souhaitable de disposer d'éléments combustibles dont l'enrichissement des pastilles est variable suivant la direction axiale du crayon ou encore, des éléments combustibles dont les zones voisines des extrémités comportent des pastilles en un matériau tel qu'un matériau fertile, par exemple l'oxyde d'uranium $UO_2$ appauvri ou naturel ou encore de l'oxyde de thorium $ThO_2$ pour la constitution de couvertures axiales à la partie supérieure et à la partie inférieure du coeur.

Il peut être également nécessaire de disposer d'éléments combustibles comportant, dans leur partie centrale, des éléments appelés poisons consommables, susceptibles d'absorber les neutrons. De tels éléments de poison consommable peuvent par exemple se présenter sous la forme de plaquettes qui sont intercalées chacune entre deux pastilles successives de combustible nucléaire.

Il est bien évident que la fabrication de tels éléments combustibles composites est beaucoup plus complexe que la fabrication des éléments combustibles homogènes, puisque des pastilles ou plaquettes de type différent doivent être introduites dans la gaine de l'élément combustible en nombre et suivant un ordre déterminés. Il est également nécessaire de disposer de stocks de pastilles de nature différente, ce qui complique la gestion de l'usine de production du combustible.

Le but de l'invention est donc de proposer un élément combustible nucléaire comportant une gaine tubulaire fermée à ses extrémités, en un matériau résistant au fluage et à la corrosion sous l'action d'un réfrigérant à pression et température élevées d'un réacteur nucléaire et renfermant des pastilles en un matériau ayant une influence sur la réaction nucléaire dans le réacteur, dont une partie au moins est en matériau combustible nucléaire, cet élément combustible permettant de limiter l'interaction pastilles-gaine, malgré un jeu réduit entre les pastilles et la gaine et permettant également de simplifier la fabrication des éléments combustibles composites comportant des zones successives de nature différente dans la direction axiale.

Dans ce but, l'élément combustible nucléaire suivant l'invention comporte une pluralité de capsules modulaires disposées les unes à la suite des autres dans la direction axiale, à l'intérieur de la gaine, chacune des capsules modulaires étant constituée par une enveloppe tubulaire fermée à ses deux extrémités par un élément poreux, et par un empilement de pastilles insérées sans jeu radial à l'intérieur de l'enveloppe dont le diamètre extérieur est tel que le jeu radial entre la surface extérieure de la capsule et la surface intérieure de la gaine soit très faible.

Afin de bien faire comprendre l'invention, on va maintenant décrire, à titre d'exemple non limitatif, en se référant aux figures jointes en annexe, un mode de réalisation d'un élément combustible nucléaire suivant l'invention, un mode de réalisation d'une capsule modulaire pour cet élément combustible et le procédé de fabrication d'une capsule modulaire.

La figure 1 est une vue en coupe axiale d'un élément combustible nucléaire suivant l'invention.

La figure 2 est une vue en coupe axiale, à plus grande échelle, d'une capsule modulaire de l'élément combustible représenté sur la figure 1.

Les figures 3, 4, 5 et 6 sont des vues en coupe axiale d'une capsule modulaire, au cours de différentes étapes de la fabrication de cette capsule.

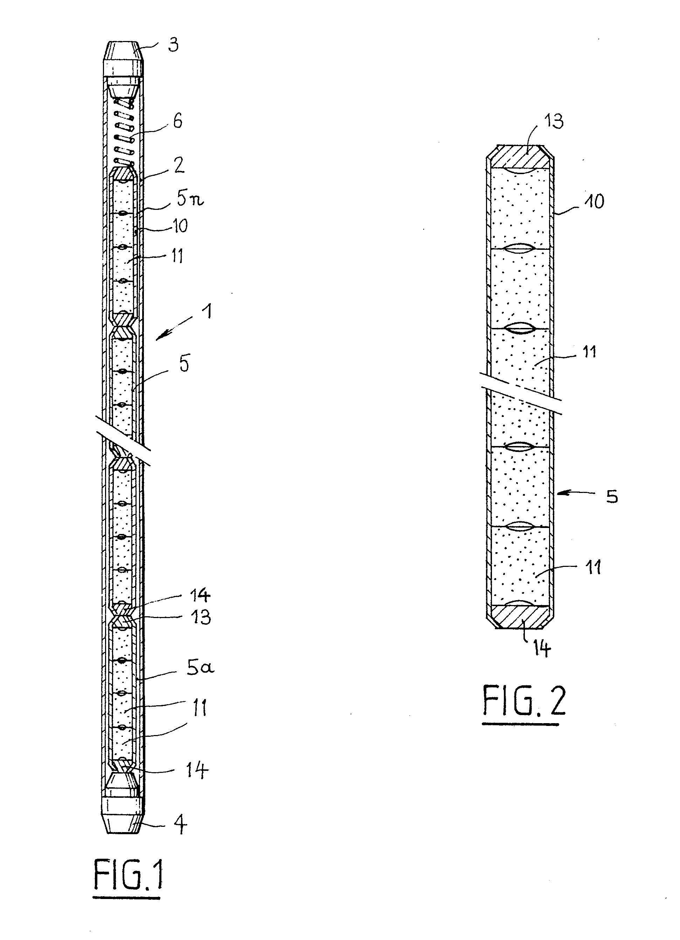

Sur la figure 1, on voit un élément combustible désigné de manière générale par le repère 1 et comportant une gaine tubulaire externe 2 de grande longueur par rapport à son diamètre, fermée à ses extrémités par des bouchons 3 et 4. L'élément combustible selon l'invention est réalisé de façon à présenter les mêmes dimensions qu'un élément combustible suivant l'art antérieur utilisé dans les réacteurs nucléaires à eau sous pression actuellement en service.

Un tel élément combustible, appelé crayon combustible, comporte une gaine en alliage de zirconium (Zircaloy) dont la longueur est voisine de quatre mètres pour un diamètre extérieur de l'ordre de 0,01 mètre.

La gaine externe 2 de l'élément combustible suivant l'invention est réalisée à partir d'un tube de Zircaloy identique à ceux utilisés comme gaine pour les éléments combustibles suivant l'art antérieur dans lesquels sont empilées des pastilles de combustible.

La gaine externe 2 renferme une pluralité de capsules 5 qui seront décrites plus en détail en se référant à la figure 2.

Les capsules 5 de forme cylindrique sont empilées les unes à la suite des autres, à l'intérieur de la gaine 2 et suivant la direction axiale de cette gaine.

Pour la réalisation de l'élément combustible représenté sur la figure 1, on commence par fixer de façon étanche le bouchon 4 à l'extrémité correspondante de la gaine 2, par soudage du bouchon sur la gaine. Une première capsule 5a est introduite dans la gaine et vient reposer par son extrémité inférieure sur le bouchon 4. Les autres capsules sont empilées successivement, les unes sur les autres, jusqu'à la dernière capsule 5n disposée à la partie supérieure de l'élément combustible. On effectue alors la fermeture de la gaine 2 de l'élément combustible, grâce au bouchon supérieur 3, un ressort 6 étant intercalé entre la dernière capsule 5n et le bouchon 3. Pendant le soudage du bouchon 3 à 1'extrémité de la gaine 2, une atmosphère d'hélium sous pression est maintenue à l'intérieur de la gaine 2.

Comme il est visible sur la figure 2, chacune des capsules 5 comporte une enveloppe tubulaire 10 dans laquelle sont empilées des pastilles frittées 11 en un matériau combustible tel que l'oxyde d'uranium ou l'oxyde mixte d'uranium et de plutonium ou encore en un oxyde mixte d'uranium et de gadolinium, un oxyde mixte d'uranium et de thorium ou un mélange de ces oxydes.

L'enveloppe tubulaire ou gaine de la capsule modulaire 5 est fermée à ses extrémités par des bouchons en matériau poreux 13 et 14.

La gaine 10 est en contact, par sa surface intérieure, avec la surface latérale des pastilles 11, sur toute la longueur de la capsule. En d'autres termes, il ne subsiste pas de jeu radial entre les capsules 11 et l'enveloppe tubulaire 10. L'enveloppe tubulaire 10 présente un diamètre extérieur dont la valeur n'est que de très peu inférieure au diamètre intérieur de la gaine 2. Il subsiste, après l'assemblage de l'élément combustible 1, un jeu radial 12 très faible entre la surface extérieure de la capsule 5 et la surface intérieure de la gaine 2. Ce jeu radial peut al ler de quelques centièmes à un ou deux dixièmes de millimètre.

Le diamètre extérieur de la capsule modulaire 5 correspond au diamètre des capsules 11 augmenté de deux fois l'épaisseur de l'enveloppe tubulaire 10.

L'enveloppe 10 est réalisée à partir d'un tube en Zircaloy d'une épaisseur de 0,15 à 0,30 mm.

On peut donc facilement prévoir un jeu 12 entre les capsules et la gaine d'une valeur faible et parfaitement déterminée en choisissant judicieusement le diamètre des pastilles et l'épaisseur de l'enveloppe 10.

La longueur limitée des capsules par rapport à la longueur totale de l'élément combustible permet d'autre part de faciliter le montage des capsules, même si le jeu résiduel 12 est très faible, par rapport au montage d'un tube de grande longueur à l'intérieur d'une gaine, dans le cas d'un crayon à double gainage selon l'art antérieur.

L'enveloppe tubulaire 10 étant en contact avec les pastilles combustibles 11, le jeu entre les pastilles et la gaine se limite au jeu 12 de montage des capsules dans la gaine externe 2. Ce jeu réduit permet de diminuer la température des pastilles combustibles 11, en service dans le réacteur nucléaire. On pourrait également augmenter l'épaisseur de l'enveloppe tubulaire 10 des capsules ou appliquer un revêtement absorbant sur cette enveloppe tubulaire, sans diminuer de façon notable les transferts thermiques entre les pastilles combustibles et la gaine externe.

En plus de ces avantages, l'élément combustible suivant l'invention comportant des capsules modulaires dans lesquelles les pastilles combustibles sont en contact avec la paroi intérieure de l'envelop pe de la capsule, présente, par rapport aux crayons à double gainage selon l'art antérieur, l'avantage de diminuer le risque d'introduction d'un fragment de matériau combustible tel que de l'$UO_2$, dans le jeu entre les pastilles et la gaine. Un tel fragment, lorsqu'il vient se placer au contact de la surface intérieure de la gaine peut produire un perçage de cette gaine par interaction mécanique, pendant le fonctionnement du réacteur.

Les pastilles poreuses 13 et 14 fermant la capsule 15 peuvent être constituées, de manière avantageuse, par un matériau absorbant les produits de fission gazeux. Ces pastilles poreuses d'extrémité pourraient être également constituées par les pastilles 11 situées aux extrémités de la capsule 5.

Les extrémités de l'enveloppe tubulaire 10 sont rabattues sur les capsules 13 et 14, si bien qu'elles assurent le maintien de ces capsules et des pastilles 11 de l'empilement, par sertissage.

Pour la réalisation d'éléments combustibles présentant des zones successives différentes dans la direction axiale, on pourra réaliser des capsules 5 de plusieurs types.

Par exemple, on pourra prévoir la fabrication de capsules 5 renfermant des pastilles combustibles 11 ayant des degrés d'enrichissement variables.

En réalisant l'empilement des capsules 5 dans la gaine 2, lors de la fabrication de l'élément combustible 1, on pourra choisir successivement des capsules renfermant des pastilles combustibles ayant des taux d'enrichissement différents. Il est bien évident qu'une telle façon de procéder est beaucoup plus rapide et beaucoup plus simple que la méthode antérieure consistant à empiler des pastilles combustibles d'enrichissement différent dans une gaine constituée par un tube de grande longueur. Il est également possible, dans le cas où l'on désire réaliser des éléments combustibles composites de prévoir la fabrication de capsules modulaires 5 renfermant des pastilles ou autres éléments de natures différentes. On pourra ainsi prévoir des capsules 5 remplies de pastilles en un matériau fertile tel que l'oxyde d'uranium appauvri ou naturel ou encore tel que l'oxyde de thorium $ThO_2$, ces capsules étant destinées à constituer les parties d'extrémité, pour la réalisation de couvertures axiales dans le coeur du réacteur.

On pourra également prévoir la fabrication de capsules 5 renfermant des poisons consommables, ces capsules étant ensuite placées de préférence dans la partie centrale de l'élément combustible 1.

Il est également possible de prévoir simultanément ces trois possibilités pour réaliser des crayons combustibles composites à enrichissement variable par zone.

Dans tous les cas, il suffit de placer les capsules 5 correspondantes aux endroits voulus suivant la direction axiale du crayon 1.

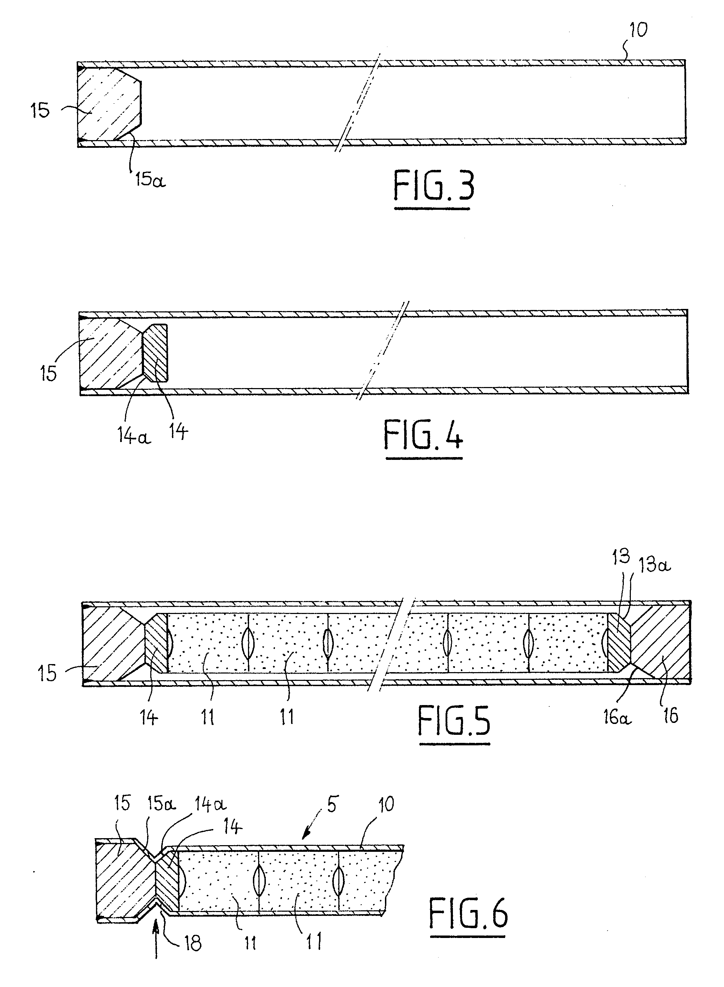

On va maintenant se reporter aux figures 3 à 6 pour décrire le procédé de fabrication d'une capsule modulaire d'un élément combustible suivant l'invention.

Sur la figure 3, on voit l'enveloppe tubulaire 10 d'une telle capsule constituée par un tube de Zircaloy dont l'épaisseur est comprise entre 0,15 et 0,30 mm qui peut être revêtu éventuellement par un poison consommable.

Dans un premier temps, l'une des extrémités de l'enveloppe tubulaire 10 est fermée par un bouchon 15 présentant un chanfrein 15a dirigé vers l'intérieur du tube. Dans cette première étape, le bouchon 15 est soudé à l'extrémité de l'enveloppe tubulaire 10.

Dans une seconde étape représentée sur la figure 4, on introduit une pastille poreuse 14 présentant un chanfrein 14a dans le tube 10, de façon que le chanfrein 14a soit dirigé vers le bouchon 15. La pastille 14 est placée dans le tube au contact du bouchon 15.

Dans une troisième étape représentée sur la figure 5, on introduit successivement des pastilles 11 en matériau combustible (ou d'une autre nature), dans le tube 10, à la suite de la pastille poreuse 14. Lorsque le nombre voulu de pastilles combustibles 11 est chargé dans le tube 10, on place une seconde pastille poreuse 13 comportant un chanfrein 13a en contact avec la dernière pastille combustible 11 chargée dans le tube, de façon que le chanfrein 13a soit dirigé vers l'extérieur du tube. On introduit alors un bouchon 16 comportant un chanfrein 16a à l'extrémité du tube 10, le chanfrein 16a étant dirigé vers la capsule poreuse 13. Le bouchon 16 est soudé au tube 10 de la même manière que le bouchon 15.

Dans une quatrième étape, l'ensemble représenté sur la figure 5 comportant le tube 10 fermé par les bouchons 15 et 16 est placé dans une enceinte dans laquelle on établit une pression et une température élevées. Cette opération connue sous le nom de marmittage réalise une déformation de la gaine qui est appliquée sur les pastilles 11, de façon à être en contact avec ces pastilles sur toute sa surface intérieure.

Comme il est visible sur la figure 6, à l'issue de cette quatrième étape, il ne subsiste plus aucun jeu radial entre les pastilles 11 et la surface intérieure de l'enveloppe tubulaire 10. D'autre part, il s'est formé une gorge 18 au niveau des chanfreins 14a de la pastille poreuse 14 et 15a du bouchon 15.

Il est bien évident que, de la même façon, il se forme une gorge au niveau des chanfreins 13a et 16a de la capsule 13 et du bouchon 16, respectivement.

On réalise alors un découpage de l'enveloppe 10, au fond de la gorge 18 et au fond de la gorge correspondante située à l'autre extrémité de la capsule. Ce découpage permet de séparer les bouchons 15 et 16 de la capsule 5. Cette capsule se présente alors sous la forme représentée sur la figure 2.

La réalisation de l'élément combustible 1 peut être assurée par les opérations qui ont été décrites ci-dessus.

L'élément combustible obtenu présente donc l'avantage de limiter considérablement l'interaction pastilles-gaine de l'élément combustible tout en maintenant un très bon rendement thermique de cet élément combustible.

D'autre part, la réalisation modulaire de l'élément combustible suivant l'invention permet d'obtenir facilement des zones d'enrichissement variable suivant la direction axiale du crayon et des crayons présentant des zones de natures différentes, suivant leur longueur.

La longueur de chacune des capsules modulaires utilisée pour la fabrication de l'élément combustible sera choisie à la fois pour faciliter la fabrication des capsules et le montage de l'élément combustible.

L'invention ne se limite pas aux modes de réalisation qui ont été décrits.

On pourra imaginer des capsules modulaires renfermant des éléments empilés d'une nature différente de ceux qui ont été mentionnés.

On peut également envisager la fabrication d'éléments combustibles et de capsules de dimensions différentes de celles qui ont été indiquées ci-dessus.

Enfin, il est possible d'envisager d'autres modes de fabrication de capsules renfermant des pastilles qui sont en contact avec la paroi intérieure de l'enveloppe tubulaire de la capsule.

L'invention s'applique à tout type d'éléments combustibles pour un réacteur nucléaire.

## Revendications

1.- Elément combustible nucléaire comportant une gaine tubulaire (2) fermée à ses extrémités (3, 4), en un matériau résistant au fluage et à la corrosion sous l'action d'un réfrigérant à pression et température élevées d'un réacteur nucléaire, renfermant des pastilles (11), en un matériau ayant une influence sur la réaction nucléaire dans le réacteur, dont une partie au moins est en matériau combustible, caractérisé par le fait qu'il comporte une pluralité de capsules modulaires (5) disposées les unes à la suite des autres dans la direction axiale, à l'intérieur de la gaine (2), chacune des capsules modulaires (5) étant constituée par une enveloppe tubulaire (10) fermée à ses deux extrémités par un élément poreux (13, 14) et par un empilement de pastilles (11) insérées sans jeu radial à l'intérieur de l'enveloppe (10) dont le diamètre extérieur est tel que le jeu radial (12) entre la surface extérieure de la capsule (5) et la surface intérieure de la gaine (2) soit très faible.

2.- Elément combustible suivant la revendication 1, caractérisé par le fait que des capsules (5) différentes de l'élément combustible renferment des pastilles combutibles (11) ayant des taux d'enrichissement en matériau fissile différents.

3.- Elément combustible suivant l'une quelconque des revendications 1 et 2, caractérisé par le fait qu'au moins une capsule (5) de l'élément combustible (1) renferme des pastilles en un matériau absorbant les neutrons.

4.- Elément combustible suivant la revendication 3, caractérisé par le fait qu'au moins une capsule (5) renfermant des pastilles (11) en un matériau absorbant les neutrons est disposée à chacune des extrémités de l'élément combustible (1).

5.- Elément combustible suivant l'une quelconque des revendications 1 à 4, caractérisé par le fait qu'au moins une capsule (5) de l'élément combustible (1) renferme un poison consommable.

6.- Elément combustible suivant la revendication 5, caractérisé par le fait que la capsule (5) renfermant un poison consommable est disposé au voisinage de la partie centrale de l'élément combustible (1).

7.- Capsule modulaire pour un élément combustible suivant l'une quelconque des revendications 1 à 8, caractérisée par le fait qu'elle comporte une enveloppe tubulaire (10) renfermant des pastilles (11) empilées dans la direction axiale de l'enveloppe tubulaire (10) et insérées sans jeu radial à l'intérieur de cette enveloppe (10) ainsi que des éléments poreux de fermeture (13, 14) à chacune de ses extrémités.

8.- Capsule modulaire suivant la revendication 7, caractérisée par le fait que les éléments poreux (13, 14) de fermeture sont en un matériau absorbant les produits de fission.

9.- Capsule modulaire suivant la revendication 7, caractérisée par le fait que les éléments poreux (13, 14) de fermeture des capsules (5) sont constitués par des pastilles (11) disposées aux extrémités de la capsule (5).

10.- Capsule modulaire suivant l'une quelconque des revendications 7 à 9, caractérisée par le fait que l'épaisseur de l'enveloppe tubulaire (10) est comprise entre 0,15 et 0,30 mm.

11.- Procédé de fabrication d'une capsule modulaire suivant la revendication 7, caractérisé par le fait qu'on ferme, de façon étanche, une première extrémité d'une enveloppe tubulaire (10) grâce à un bouchon (15) comportant un chanfrein (15a), le chanfrein (15a) étant dirigé vers l'intérieur de l'enveloppe tubulaire (10),
- qu'on introduit dans l'enveloppe (10), jusqu'à sa mise en contact avec le bouchon (15), une pastille poreuse (14) comportant un chanfrein (14a) dirigé vers le bouchon (15),
- qu'on remplit l'enveloppe tubulaire (10) avec des pastilles (11) constituant un empilement à la suite de la pastille (14),
- qu'on place à la suite de la dernière pastille (11) introduite dans le tube et en contact avec celle-ci, une pastille poreuse (13) comportant un chanfrein (13a) dirigé vers l'extérieur du tube,
- qu'on ferme la seconde extrémité du tube, de façon étanche, avec un bouchon (16) comportant un chanfrein (16a) dirigé vers la capsule (13),
- qu'on place l'enveloppe tubulaire (10) et les éléments qu'elle contient dans une enceinte sous pression et à haute température,
- qu'on réalise sous pression et à haute température l'application de l'enveloppe tubulaire (10) sur les pastilles (11) et sur les chanfreins (13a, 14a, 15a, 16a) des pastilles poreuses (13, 14) et des bouchons (15, 16) respectivement et qu'on réalise le découpage de l'enveloppe tubulaire (10), au niveau des zones de jonction entre les chanfreins (13a, 16a) et (14a, 15a).

0296953

FIG.1

FIG. 2

0296953

FIG.3

FIG.4

FIG.5

FIG.6

Office européen des brevets
RAPPORT DE RECHERCHE EUROPEENNE
Numero de la demande

EP 88 40 1534

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 489 643 (AB ATOMENERGI)<br>* Page 3, alinéa 2 - page 4, alinéa 2; figure 1 *<br>--- | 1 | G 21 C 3/20 |
| A | US-A-3 197 381 (L.R. BLAKE)<br>* Colonne 2, ligne 28 - colonne 3, ligne 34; figures 1,2 *<br>--- | 1 | |
| A | US-A-3 192 621 (S.G. BAUER et al.)<br>* Colonne 2, lignes 13-48; figures 1,2,4 *<br>--- | 11 | |
| A | FR-A-2 012 583 (BABCOCK)<br>* Revendication 1; figures *<br>--- | 1,7-9 | |
| A | DE-A-3 517 404 (KWU)<br>* Page 4, lignes 13-25; figure 7 *<br>--- | 1,3,6 | |
| A | EP-A-0 145 514 (FRAGEMA)<br>& FR-A-2 551 905 (Cat. D)<br>----- | | |

**DOMAINES TECHNIQUES RECHERCHES (Int. Cl.4)**

G 21 C 3
G 21 C 21

Le présent rapport a été établi pour toutes les revendications

| Lieu de la recherche | Date d'achèvement de la recherche | Examinateur |
|---|---|---|
| LA HAYE | 23-09-1988 | JANDL F. |